# EUROPEAN PATENT SPECIFICATION

(11) **EP 1 229 984 B1**
(45) Date of publication and mention of the grant of the patent: **15.12.2004**
(21) Application number: 00968169.3
(22) Date of filing: 24.10.2000
(51) Int. Cl.: B01D 27/14, B01D 36/00, B01D 27/07

(54) **DIESEL FUEL FILTER AND WATER SEPARATOR**
DIESELKRAFTSTOFF-FILTER UND WASSERABSCHEIDER
FILTRE A CARBURANT DIESEL ET SEPARATEUR D'EAU

(30) Priority: 08.11.1999 IT RE990052 U
(43) Date of publication of application: 14.08.2002
(73) Proprietor: UFI Filters S.p.A., 46047 Porto Mantovano (Mantova) (IT)
(72) Inventor: GIRONDI, Giorgio, 98003 Monaco (MC)
(74) Representative: Corradini, Corrado
(86) International application number: PCT/IB2000/001524
(87) International publication number: WO 2001/034273

(56) References cited:
- EP-A- 0 470 440
- EP-A- 0 702 144
- EP-A- 0 858 825
- US-A- 5 938 921

## Description

### Technical field

This invention relates to the filtration of fuel, in particular of diesel engine fuel (generally known as gasoil).

### Background art

In this sector the sophistication of injection equipment requires the most careful filtration to prevent the impurities present in the fuel causing damage to and malfunction of the delicate injection equipment.

Filters are known using a filtering means of the type formed from paper rolled about a central axis and traversed by the fuel stream in an axial direction. These filters have a useful filtering surface which is much greater than the more traditional filters of pleated paper.

A technical problem which has not been totally solved, and also exists with the said filters with rolled paper, is caused by the presence of water parts in the fuel, which are not intercepted by the usual filter cartridges (designed to intercept more solid parts) and hence reach the downstream mechanical members, resulting in oxidation problems and damage to these members. This problem is felt particularly in injection feed equipment.

Filter units comprising separation means for water are disclosed by US 5,938,921, in which separator means are provided consisting of a downwardly inclined flow surface (22), positioned downstream the filtering means, along which the fluid flows and which deviates the fuel stream, to aggregate and separate the water parts present in the fuel.

The units of US 5,938,921 have the drawback that a part of the water present in the fuel does not aggregate and therefore is not separated before the fuel reaches the mechanical parts of the engine.

Separation means of the water present in the fuel are also disclosed by EP 858,825, and comprise a downwardly inclined flow surface positioned upstream the filtering means and associated to a mesh positioned upstream and against the filtering means.

The separation means disclosed by EP 858,825 have the drawback that the solid Impurities of the fuel clog the mesh in a short time, and need the filter unit to be cleaned.

An object of this invention is to provide a filter using a filtering means which is traversed by the fuel stream in an axial direction, in particular a filtering means with rolled paper, and is able to effect a very high degree of water separation.

### Disclosure of the invention

This and further objects are attained by the invention as characterised in the claims.

The invention is based on the fact of comprising a water separator means positioned below the lower surface of the filtering means, and comprising, facing said lower surface and forming an angle to the vertical, a downwardly inclined flow surface along which the fluid flows and which deviates the fuel stream, to aggregate and separate the water parts present in the fuel; and further comprising a lower chamber positioned below the separator means, to collect the water parts separated from the fuel.

The invention is described in detail hereinafter with the aid of the accompanying figures which illustrate one embodiment thereof by way of non-limiting example.

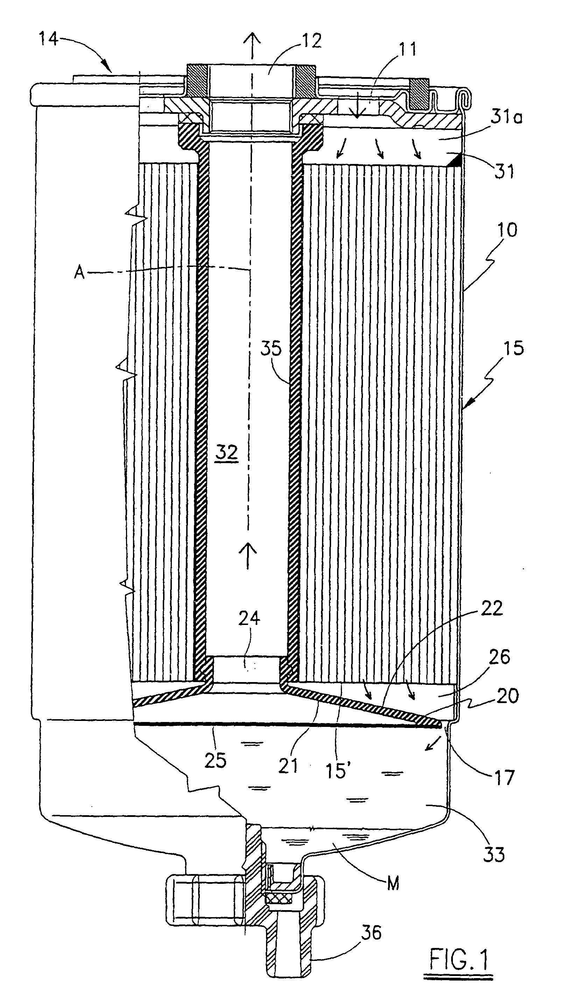

Figure 1 is an axial section through the filter of the invention.
Figure 2 is an enlarged detail of Figure 1.
Figure 3 is a section on the plane III-III of Figure 2.
Figure 4 is an enlarged detail, as Figure 2, of a second embodiment of the separator means 20.
Figure 5 is a section on the plane V-V of Figure 4.

The filter comprises an outer casing 10, in particular of substantially cylindrical shape with slight dishing, having a vertical axis A.

The fuel inlet and outlet are located on the upper cover 14 of the container 10.

Specifically, the inlet is defined by various apertures 11 regularly distributed at a constant distance from the axis A, the outlet being defined by a single aperture with its centre on the axis A.

Within the container 10 there is defined a first chamber 31 of vertical axis, communicating with the inlet apertures 11, and an exit chamber 32, communicating with the outlet 12 and substantially coaxial with the first chamber 31.

The two chambers 31 and 32 are, at least partly, separated from each other by a central tubular duct 35, rigid with the outer casing 10 of the filter and fixed to the upper cover 14, which bounds said exit chamber 32.

Within the casing 10 below the separator means, there is positioned a lower chamber 33 to collect those water parts which are separated from the fuel. The exit chamber 32 is positioned along the axis of the filtering means 15 and communicates, at its lower end, with the lower chamber 33.

A filtering means 15, in particular of the type formed from an overall cylindrical roll of paper wrapped about its axis, is positioned in the first chamber 31; the filtering means 15 is disposed coaxially to the chamber 31 and to the chamber 32, and occupies in cross-section the entire section of the chamber 31, whereas in the axial direction it occupies the chamber 31 virtually completely, except for the top portion 31a of the chamber 31 which communicates with the inlet apertures 11, this remaining free. The filtering means 15 is traversed by the fuel stream in a substantially axial direction (ie parallel to the generators of the paper roll), and possesses a substantially horizontal lower surface 15' from which the fluid leaves in a substantially vertical direction after passing through the filtering means.

A water separator means 20 is provided below the lower surface 15' of the filtering means 15, and comprises a flow deviator member 21 having an upwardly converging upper frusto-conical surface 22 virtually completely occupying the projection of the lower surface 15'of the filtering means 15; this upper surface 22, which is downwardly inclined and forms an angle to the vertical, defines a flow surface along which the fluid flows and which deviates the fuel stream, to aggregate and separate the water parts present in the fuel.

The member 21 separates the first chamber 31 from the lower chamber 33 and has, in plan view, a circular shape of extension slightly less than the cross-section through the inner surface of the casing 10; between the peripheral edge of the member 21 and the inner surface of the casing 10 there is therefore defined a narrow annular passage 17 through which the flow passes from the chamber 31 to the chamber 33.

The deviator member 21 is lowerly hollow and has a central passage port 24 positioned at the lower end of the exit chamber 32, in particular fixed to the lower end of the central duct 35.

The separator means 20 comprises a filtering mesh 25 positioned on the lower end of the deviator member 22 to cover the cavity in this latter and the access to the port 24. The filtering mesh 25 is coated with a substance such as poly-tetra-fluoro-ethylene (PTFE - usually known as Teflon^{R}) or silicone or the like, and has passage pores of diameter not exceeding about 200 micron, to intercept the water parts present in the fuel.

In a preferred embodiment, the filtering mesh 25 is formed of single-thread fabric with thread diameter varying from 0.02 to 0.2 mm and a weft spacing varying from 25 to 200 micron. The filtering mesh 25 is preferably of stainless steel, nylon or polyamide.

The coating thickness is preferably 2-8 micron.

In practice, the PTFE is applied either to both sides or only to one side of the filtering mesh 25, by spraying followed by baking in an oven.

In operation, the fuel firstly enters via the aperture 11 into the upper portion 31a of the chamber 31, and from there descends axially along the filtering means 15, flowing along the mutually adhering surfaces of the rolled paper sheet, where the more solid foreign particles are retained, whereas the water particles are not retained.

On leaving the filtering means 15, the fuel stream encounters the deviator member 21 which deviates its path and compels it to flow along the upper surface 22. Being heavier than the fuel, the water particles tend to maintain their exit direction from the lower surface 15' of the filtering means 15 more than the fuel, hence tending to deposit on the surface 22; a further factor favouring deposition of the water particles on the surface 22 is that in flowing along the surface 22, these particles are slowed down more than the fuel. The overall result is that the water particles tend to sediment on the surface 22 where they accumulate and aggregate, to then, as their mass increases, fall onto the bottom of the lower chamber 33 where they form an accumulated mass M, which is periodically bled through a lower outlet 36.

The fuel stream which has entered the lower chamber 33 then rises upwards through the exit chamber 32.

However, before entering the chamber 32, the stream encounters the filtering mesh 25 which retains those water particles which were not separated by the surface 22.

In this respect, it has been found that the filtering mesh 25, having the aforedescribed technical characteristics, prevents passage of water through it to a substantially complete or at least considerable extent, while not posing any obstacle to passage of the actual fuel.

Presumably, this favourable phenomenon is caused by a different surface tension of the water particles, which, in the presence of the teflon or silicon covered mesh 25, break the bonds with the fuel molecules, agglomerate with each other and are unable to pass through the mesh; and then fall downwards onto the bottom of the collection chamber 33.

Obviously the smaller the diameter of the pores of the filtering mesh 25, the greater their intercepting action on the water particles. In practice, with a diameter of close to 20 microns there is already virtually total interception of the water particles.

Using the invention it has been found experimentally possible to achieve very high levels of water separation, close to total separation.

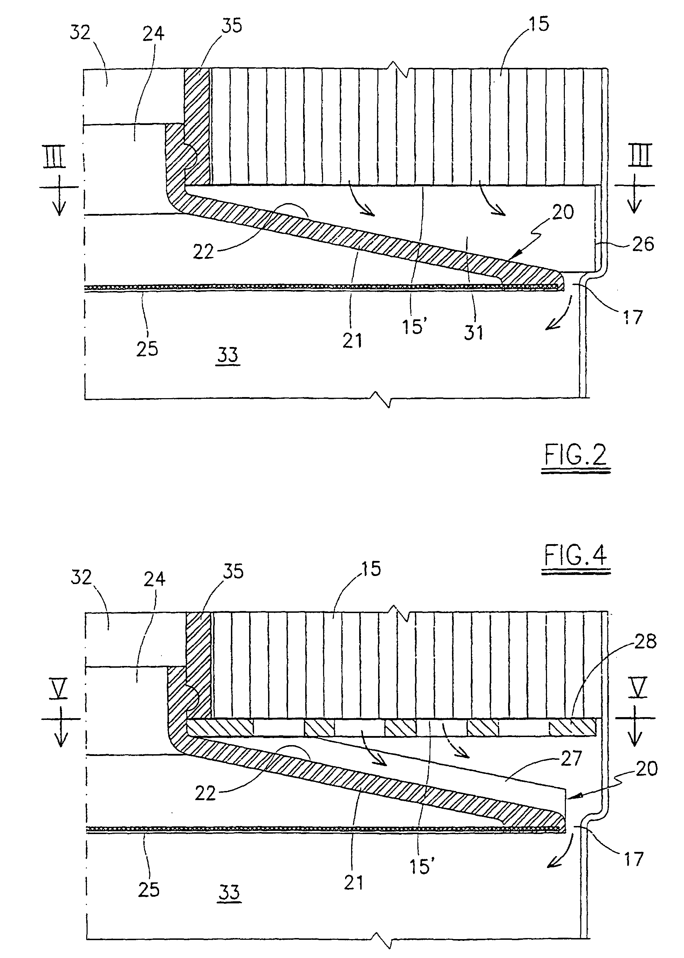

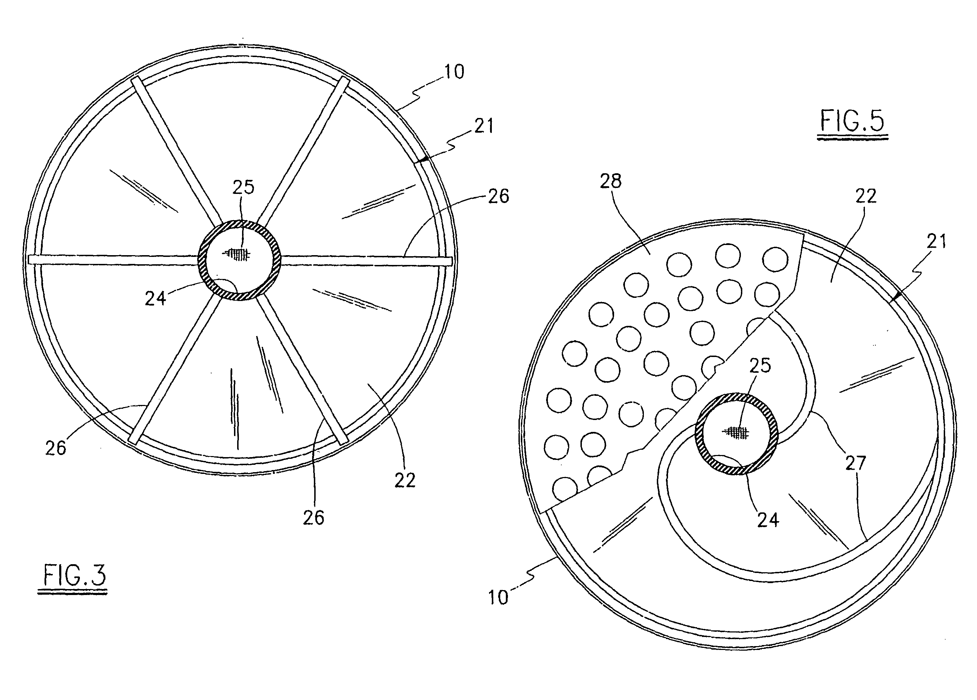

In the embodiment shown in Figures 2 and 3, the deviator member 21 is also arranged to support the filtering means 15. For this purpose the deviator member 21 comprises a plurality of radial elements 26 projecting upwards from the flow surface 22, to act as a support for the lower surface 15' of the filtering means 15.

In the embodiment shown in Figures 4 and 5, the deviator member 21 comprises one or more projecting ridges 27 situated on the flow surface 22, to define spiral paths starting from the vertex of the surface 22. The ridges 27 increase the length of the fluid travel along the surface 22, to hence facilitate sedimentation of the water particles on the surface 22.

The filtering means 15 is supported on a perforated horizontal baffle 28 rigid with the member 21 and positioned above the surface 22.

## Claims

1. A fuel filter, in particular for diesel engines, comprising an outer casing (10), a first chamber (31) of vertical axis and, positioned in the first chamber (31), a filtering means (15) traversed by the fuel in a substantially axial direction and having a lower surface (15') from which the fluid leaves in a substantially vertical direction after passing through the filtering means (15), a filter exit chamber (32) coaxial to the filtering means and communicating, at its lower end, with a lower chamber (33), a water separator means (20), comprising a flow deviator member (21) having an upwardly converging upper frusto-conical surface (22) virtually completely occupying the projection of the lower surface (15') of the filtering means 15, to define said flow surface, the deviator member (21) being lowerly hollow and having a central passage port (24) positioned at the lower end of the exit chamber (32), and a lower chamber (33) positioned below the separator means (20), to collect the water parts separated from the fuel **characterised in that** the separator means (20) comprises a filtering mesh (25) coated with poly-tetra-fluoro-ethylene (PTFE) or silicone, and having passage pores of diameter not exceeding about 200 micron, to intercept the water parts present in the fuel, said filtering mesh (25) being positioned on the lower end of the deviator member (22) to cover the cavity therein.

2. A filter as claimed in claim 1, **characterised by** comprising, rigid with the outer casing (10) of the filter, a central tubular duct (35) which bounds said exit chamber (32), the deviator member (21) being fixed to the lower end of said central duct (35).

3. A filter as claimed in claim 2, **characterised in that** the deviator member (21) comprises a plurality of radial support elements (26) projecting upwards from the flow surface (22), to act as a support for the lower surface (15') of the filtering means (15).

4. A filter as claimed in claim 2, **characterised in that** the deviator member (21) comprises one or more projecting ridges (27) situated on the flow surface (22), to define spiral paths starting from the vertex of the surface (22), to increase the length of the fluid travel.

## Patentansprüche

1. Kraftstofffilter, insbesondere für Dieselmotoren, der ein Außengehäuse (10), eine erste Kammer (31) mit vertikaler Achse und eine in der ersten Kammer (31) positionierte, von dem Kraftstoff in einer im Wesentlichen axialen Richtung durchquerte Filtereinrichtung (15) mit einer unteren Fläche (15'), von der die Flüssigkeit nach dem Durchgang durch die Filtereinrichtung (15) in einer im Wesentlichen vertikalen Richtung austritt, eine koaxial zu der Filtereinrichtung verlaufende Filterausgangskammer (32), die an ihrem unteren Ende mit einer unteren Kammer (33) in Verbindung steht, eine Wasserabscheidereinrichtung (20), die ein Flussablenkungsbauteil (21) mit einer nach oben zusammenlaufenden kegelstumpfförmigen Oberfläche (22) aufweist, welche die Grundrissebene der unteren Fläche (15') der Filtereinrichtung (15) praktisch vollständig belegt, um die Flussfläche festzulegen, wobei das Ablenkungsbauteil (21) unten hohl ist und einen an dem unteren Ende der Ausgangskammer (32) positionierten mittigen Durchgangsanschluss (24), sowie eine unter der Abscheidereinrichtung (20) positionierte untere Kammer (33) zum Sammeln der von dem Kraftstoff abgeschiedenen Wasseranteile aufweist,
**dadurch gekennzeichnet, dass**
die Abscheidereinrichtung (20) ein mit Polytetrafluoroethylen (PTFE) oder Silikon beschichtetes Filtersieb (25) aufweist, welches Durchgangsporen mit einem Durchmesser von nicht größer als etwa 200 Mikron aufweist, um die in dem Kraftstoff vorhandenen Wasseranteile abzufangen, wobei das Filtersieb (25) auf dem unteren Ende des Ablenkungsbauteiles (22) positioniert ist, um den darin vorhandenen Hohlraum abzudecken.

2. Filter nach Anspruch 1,
**dadurch gekennzeichnet, dass**
er einen starr mit dem Außengehäuse (10) des Filters verbundenen mittigen, rohrförmigen Kanal (35) aufweist, der die Ausgangskammer (32) begrenzt, wobei das Ablenkungsbauteil (21) an dem unteren Ende des mittigen Kanals (35) befestigt ist.

3. Filter nach Anspruch 2,
**dadurch gekennzeichnet, dass**
das Ablenkungsbauteil (21) eine Mehrzahl radialer Trägerelemente (26) aufweist, die von der Flussfläche (22) nach oben hervorstehen, um als Träger für die untere Fläche (15') der Filtereinrichtung (15) zu wirken.

4. Filter nach Anspruch 2,
**dadurch gekennzeichnet, dass**
das Ablenkungsbauteil (21) einen oder mehrere hervorstehende Rippen (27) aufweist, die auf der Flussfläche (22) angeordnet sind, um von dem Scheitelpunkt der Fläche (22) ausgehend Spiralpfade festzulegen, um die Länge der Flüssigkeitsbewegungsstrecke zu erhöhen.

## Revendications

1. Filtre à carburant, en particulier pour moteur diesel, comprenant un carter externe (10), une première chambre (31) d'axe vertical et, disposé dans la première chambre (31), un dispositif (15) de filtration parcouru par le carburant en direction pratiquement axiale et ayant une surface inférieure (15') à partir de laquelle le fluide s'écarte en direction pratiquement verticale après être passé dans le dispositif de filtration (15), une chambre (32) de sortie de filtre coaxiale au dispositif de filtration et communiquant, à son extrémité inférieure, avec une chambre inférieure (33), et un dispositif séparateur d'eau (20) qui comporte un organe (21) de déviation de courant ayant une surface tronconique supérieure (22) qui converge vers le haut et qui occupe pratiquement en totalité la saillie de la surface inférieure (15') du dispositif de filtration (15) pour délimiter la surface de circulation, l'organe de déviation (21) étant creux à la partie inférieure et ayant un canal central (24) formant un passage disposé à l'extrémité inférieure de la chambre de sortie (32) et une chambre inférieure (33) disposée au-dessous du dispositif séparateur (20) pour collecter les parties d'eau séparées du carburant, **caractérisé en ce que** le dispositif séparateur (20) comporte une grille de filtration (25) revêtue de polytétrafluoréthylène (PTFE) ou de silicone et ayant des pores de passage dont le diamètre ne dépasse pas 200 µm environ, pour intercepter les parties d'eau présentes dans le carburant, la grille de filtration (25) étant disposée à l'extrémité inférieure de l'organe de déviation (22) afin qu'elle recouvre la cavité formée à l'intérieur.

2. Filtre selon la revendication 1, **caractérisé en ce qu'**il comprend, sous forme fixée rigidement au carter externe (10) du filtre, un conduit tubulaire central (35) qui délimite la chambre de sortie (32), l'organe de déviation (21) étant fixé à l'extrémité inférieure du conduit central (35).

3. Filtre selon la revendication 2, **caractérisé en ce que** l'organe de déviation (21) comprend plusieurs éléments radiaux de support (26) qui dépassent au-dessus de la surface d'écoulement (22) pour jouer le rôle d'un support de la surface inférieure (15') du dispositif de filtration (15).

4. Filtre selon la revendication 2, **caractérisé en ce que** l'organe de déviation (21) comprend une ou plusieurs arêtes (27) en saillie placées sur la surface d'écoulement (22) pour délimiter les trajets spiralés commençant au sommet de la surface (22) pour augmenter la longueur de parcours du fluide.
